# EUROPÄISCHE PATENTSCHRIFT

(11) **EP 0 544 879 B1**
(45) Veröffentlichungstag und Bekanntmachung des Hinweises auf die Patenterteilung: **02.08.1995**
(21) Anmeldenummer: 92913118.3
(22) Anmeldetag: 13.06.1992
(51) Int. Cl.: B65G 63/00, B65G 1/04

(54) **STÜCKGUTUMSCHLAGEINRICHTUNG**
UNIT LOADS TRANSLOADING DEVICE
SYSTEME DE TRANSBORDEMENT DE CHARGES UNITAIRES

(30) Priorität: 25.06.1991 DE 4120923
(43) Veröffentlichungstag der Anmeldung: 09.06.1993
(73) Patentinhaber: Krupp Fördertechnik GmbH, 47226 Duisburg (DE)
(72) Erfinder: ZIMEK, Dieter, D-4300 Essen 1 (DE)
(86) Internationale Anmeldenummer: EP9201339
(87) Internationale Veröffentlichungsnummer: WO9300281

(56) Entgegenhaltungen:
- DE-A- 1 556 043
- DE-A- 2 506 450
- FÖRDERN UND HEBEN. Bd. 40, Nr. 8, August 1990, MAINZ DE Seiten 543 - 544;COHRS: 'Wirtschaftlicher Container-Umschlag mit stationärem Gelenkarm'

## Beschreibung

Die Erfindung bezieht sich auf eine Einrichtung zum Umschlagen von Stückgut in Form von Ladeeinheiten wie Containern, Wechselbehältern, Sattelanhängern o.dgl. zwischen Straßen- und Schienenfahrzeugen mit einem auf einer Seite eines ein- oder mehrspurigen Schienenverkehrsweges liegenden ein- oder mehrgeschossigen Lager für die Ladeeinheiten, mit einem ein- oder mehrspurigen Straßenverkehrsweg auf der anderen Seite des Lagers sowie mit Hebezeugen zum Umsetzen der Ladeeinheiten (siehe zum Beispiel die DE-A-2 506 450).

Derartige Einrichtungen erfordern in bekannten Ausführungen ausgedehnte Bodenflächen. Sie sind mit einer meist größeren Anzahl aufwendiger Hebezeuge zum Umsetzen der Ladeeinheiten ausgestattet und erlauben nur die Be- und Entladung stehender Fahrzeuge. Der Umschlag erfolgt verhältnismäßig langsam. Für bestimmte Fälle beschriebene, mit dem zu ent- oder beladenden Fahrzeug mitfahrende Krane benötigen eine lange Mitfahrstrecke und sind nur beschränkt für einen Güterumschlag geeignet. Es ist Aufgabe der vorliegenden Erfindung, diese Nachteile zu beseitigen und eine Stückgutumschlageinrichtung zu schaffen, die wesentlich effizienter arbeitet.

Danach wird bei einer Einrichtung der eingangs angegebenen Art vorgeschlagen, daß das Lager in Längsrichtung zweiteilig und mit einem Arbeitsraum von mindestens der Länge der größten Ladeeinheit entsprechender Breite zwischen den beiden Lagerteilen ausgeführt ist, in dem ein die Lagerteile bedienendes Lagerhebezeug bewegbar ist, und daß an den vier Ecken des Arbeitsraumes je ein Ladehebezeug mit einer Ausladung von mindestens 3/4 der Länge der größten Ladeeinheit zum Be- und Entladen der Fahrzeuge insbesondere während deren Vorbeifahrt mit verminderter Geschwindigkeit und ggf. zum Einlagern der Ladeeinheiten in das Lager fest angeordnet ist. Eine solche Anordnung ermöglicht eine sehr schnelle abschnittsweise oder fortlaufende, d.h. bei langsam vorbeifahrendem Zug erfolgende Ent- bzw. Beladung z.B. von Containerzügen. Bei einer abschnittsweisen Behandlung wird jeweils der Zugabschnitt, der durch die Ladehebezeuge erreichbar ist, ent- oder beladen und anschließend der Zug um die Länge dieses Abschnitts weiterbewegt. Bei einer fortlaufenden Behandlung sind die Vorbeifahrgeschwindigkeit des Zuges und die Geschwindigkeit, mit der die Ladehebezeuge die Ent- oder Beladung vornehmen, aufeinander abgestimmt. Die Ladehebezeuge bewegen die Ladeeinheiten, die praktisch beliebig bemessen und ohne weiteres miteinander gemischt behandelt werden können, jeweils zwischen dem Fahrzeug und dem Arbeitsraum, unter Umständen auch unmittelbar dem Lager. Für die Bewegung der Ladeeinheiten zwischen dem Arbeitsraum und dem Lager ist das Lagerhebezeug vorgesehen, das je nach den Gegebenheiten gleichzeitig mit den Ladehebezeugen und auf deren Bewegung abgestimmt während der Ent- bzw. Beladung arbeitet, so daß im Arbeitsraum kein Stau von Ladeeinheiten entsteht. Bei der Entladung eines Zuges werden die Ladeeinheiten aus dem Arbeitsraum durch das Lagerhebezeug entweder in das Lager eingegeben oder sogleich dem Arbeitsbereich der dem Straßenverkehrsweg zugeordneten Ladehebezeuge zur Beladung der Straßenfahrzeuge zugeführt. Damit ist im günstigsten Fall eine Entladegeschwindigkeit erreichbar, die sich aus dem Zeitbedarf für das gleichzeitige Umsetzen zweier Ladeeinheiten durch die beiden dem Schienenverkehrsweg zugeordneten Ladehebezeuge, bezogen auf die diesen beiden Ladeeinheiten zugeordnete Zuglänge, ergibt. Der Platzbedarf der gesamten Einrichtung ist daher außerordentlich gering und wird praktisch nur durch den Arbeitsraum und das Pufferungsvolumen bestimmt, das so weit benötigt wird, wie ein unmittelbares Durchladen der Ladeeinheiten vom einen auf den anderen Verkehrsweg nicht erfolgt oder erwartet werden kann.

Das Lagerhebezeug ist zweckmäßig als im Arbeitsraum quer zu den Verkehrswegen verfahrbares Hubgestell mit einem beispielsweise spreaderartigen Greifer für die Ladeeinheiten und einer Übergabeeinrichtung zum Eingeben und Entnehmen der Ladeeinheiten in das bzw. aus dem Lager ausgebildet. Ein solches Hebezeug läßt sich einfach und betriebssicher gestalten und erlaubt auch bei mehrgeschossiger Lagerausführung ein schnelles Umsetzen der Ladeeinheiten zwischen Arbeitsraum und Lager.

In Weiterführung der Erfindung wird vorgeschlagen, daß das Ladehebezeug als Schwenkgreifer mit zwei aneinander angelenkten Schwenkarmen gestaltet ist, deren äußerer an seinem freien Ende einen beispielsweise spreaderartigen Greifer trägt. Diese Ausbildung des Ladehebezeuges in Verbindung mit seiner ortsfesten Anordnung ist sehr kostengünstig und störunanfällig und läßt eine leichte Einbeziehung in eine automatisierte bzw. rechnergestützte Steuerung für eine hohe Arbeitsgeschwindigkeit zu.

Zur weiteren Vereinfachung der Konstruktion und Erhöhung der Betriebssicherheit empfiehlt es sich dabei, zwischen der Befestigung des Schwenkgreifers und dem inneren Schwenkarm eine Schwenksäule mit einer Hubeinrichtung vorzusehen. Die Hubeinrichtung weist zweckmäßig einen Differentialzylinder auf.

Außerdem empfiehlt es sich, die Länge des inneren Schwenkarms so zu bemessen, daß das Gelenk zwischen dem inneren und dem äußeren Schwenkarm in jeder Betriebslage außerhalb der Mitte der nächstgelegenen Spur des betreffenden Verkehrsweges bleibt. Dadurch kann in Verbindung mit einer im übrigen unbeschränkten Bemessung und Lage des inneren Schwenkarmes beispielsweise bei einem mit einem Fahrdraht versorgten Schienenverkehrsweg der Umschlag unter dem Fahrdraht erfolgen, wenn nur der äußere Schwenkarm entsprechend gestaltet und angeordnet ist.

Statt als Schwenkgreifer kann das Ladehebezeug auch als Teleskopgreifer mit einem teleskopierbaren, horizontal und vertikal schwenkbaren Tragbalken gestaltet sein, der an seinem freien Ende einen beispielsweise spreaderartigen Greifer trägt. Ein solcher Teleskopgreifer ist einem Teleskopausleger für Fahrzeugkrane vergleichbar, jedoch mit einem obenliegenden Wippgelenk versehen. Infolge der beim Umschlag der Ladeeinheiten überlagerbaren Teleskopier-, Vertikal- und Horizontalschwenkbewegungen läßt sich damit eine sehr hohe Umschlaggeschwindigkeit erreichen.

In einer besonders vorteilhaften Ausgestaltung der Erfindung sind die beiden Ladehebezeuge einer Lagerseite derart ausgebildet und wirken derart zusammen, daß sie gemeinsam eine Ladeeinheit bewegen, insbesondere um bis zu 180° um deren lotrechte Mittelachse drehen. Auf diese Weise lassen sich die Ladehebezeuge besonders leicht gestalten, da sie ggf. nur noch je auf die alleinige Handhabung einer Ladeeinheit der halben Größe der größten zu behandelnden Ladeeinheit ausgelegt sein müssen, wenn eine geringfügige Verlängerung der Umschlagzeit lediglich für die größeren Ladeeinheiten wegen der Belegung beider Ladehebezeuge durch eine Ladeeinheit in Kauf genommen wird.

Gemäß einem weiteren Schritt der Erfindung ist zwischen dem Schienenverkehrsweg und dem Lager ein in Längsrichtung ein- oder mehrteiliger Horizontallängsförderer angeordnet. Auf einem solchen Förderer kann zur weiteren Beschleunigung des Umschlagablaufes eine Zwischenlagerung und/oder Vorsortierung der vom Zug abgenommenen bzw. ihm aufzugebenden Ladeeinheiten außerhalb des Arbeitsraumes vorgenommen werden.

Unabhängig davon ist zweckmäßig im Arbeitsraum ein quer zu den Verkehrswegen verlaufender Horizontalquerförderer angeordnet. Auf diesem Förderer, der den Boden des Arbeitsraumes bildet, kann ebenfalls eine Sortierung der Ladeeinheiten erfolgen. Er dient damit der Entlastung des Lagerhebezeuges, kann aber außerdem zum unmittelbaren Transport der Ladeeinheiten vom einen zum anderen Verkehrsweg ohne zwischenzeitliche Einlagerung eingesetzt werden und übernimmt auch insoweit zumindest teilweise Aufgaben des Lagerhebezeuges, so daß die Umschlaggeschwindigkeit sich erhöht.

Das gilt auch für eine Ausgestaltung dieses Vorschlages, wonach der Horizontalquerförderer in seiner Querrichtung in zwei Teile aufgeteilt ist, deren jeder einem Lagerteil zur getrennten gleichzeitigen Entladung über den einen Lagerteil und Beladung über den anderen Lagerteil zugeordnet ist. Mit dieser Anordnung kann sowohl bei abschnittsweiser als auch bei fortlaufender Behandlung eines Zuges gleichzeitig ent- und beladen werden. Die Behandlung über den einen bzw. anderen Lagerteil schließt dabei auch die unmittelbare Durchladung über den betreffenden Teil des Horizontalquerförderers zur bzw. von der Straße ein. Bei großen Ladeeinheiten werden beide Teile so betrieben, daß in diesem Fall nur in einer Richtung gefördert wird. Darüberhinaus kann der Horizontalquerförderer so ausgebildet sein, daß für schwere Ladeeinheiten ggf. über besondere Umsetzer unmittelbar die unterste Ebene des Lagers bedient wird. Dadurch entfällt die Notwendigkeit der Bemessung der für diese Ladeeinheiten erforderlichen Hubleistung beim Lagerhebezeug.

Zweckmäßig ist dem Schienenverkehrsweg eine Zug/Schubeinrichtung zur gegenseitigen Abstimmung der Vorbeifahrgeschwindigkeit der Schienenfahrzeuge und der Be- bzw.Entladegeschwindigkeit der Ladehebezeuge zugeordnet. Diese Einrichtung, die selbstverständlich auch bei abschnittsweiser Behandlung der Züge einzusetzen ist, kann mit einem Seilantrieb und einem Hilfswagen ausgestattet sein, der auf das letzte Pufferpaar wirkt. Sie erlaubt eine genaue Einstellung der Geschwindigkeit und die Abschaltung, das Fehlen oder Entfernen des Fahrdrahtes oder einer sonstigen Zugantriebsversorgung während des Ladens.

Um die volle Behandlungskapazität eines Lagers für einen Ladevorgang in zeitlicher Verbindung mit dem anderen Ladevorgang auszunutzen, wird erfindungsgemäß vorgeschlagen, zwei zweiteilige Lager in Längsrichtung hintereinander und mit einer dazwischenliegenden Fahrzeugbehandlungszone anzuordnen, in der eine ggf. erforderliche auch manuelle Umrüstung der Fahrzeuge zwischen Ent- und Beladung erfolgt. Damit können sowohl bei abschnittsweiser als auch bei fortlaufender Behandlung eines Zuges die Entladung und - lediglich um die Behandlung der Zuglänge zwischen den beiden Arbeitsräumen zeitversetzt, im wesentlichen also gleichzeitig - auch die Wiederbeladung in einem Durchlauf erfolgen. In der Wagenbehandlungszone werden, soweit erforderlich, die Fahrzeuge von Hand oder durch entsprechende Hilfsmittel auf den für die Beladung mit von den vorhergehenden abweichenden Ladeeinheiten geeigneten Zustand gebracht.

Für eine weitere wesentliche Beschleunigung des Umschlages sind die vorstehend beschriebenen Lageranordnungen in spiegelbildlicher Ausführung zu beiden Seiten des Schienenverkehrsweges vorgesehen. Bei mehrspurigem Schienenverkehrsweg ist so die gleichzeitige, jedenfalls voneinander unabhängige Behandlung zweier Züge möglich. Für die Behandlung eines Zuges auf einer Spur, auch wenn weitere jeweils freibleibende Spuren vorhanden sind, empfiehlt sich ein Längsversatz der beiden spiegelbildlichen Lageranordnungen gegeneinander zweckmäßig um die Länge eines Zugabschnitts, der durch die beiden dem Schienenverkehrsweg zugeordneten Ladehebezeuge eines Arbeitsraumes erreichbar ist, damit eine überlappende Behandlung vermieden wird. Dabei ist dafür zu sorgen, daß die Ausladung der Ladehebezeuge zu beiden Seiten ausreichend groß ist.

Im übrigen wird vorgeschlagen, daß die gesamte Einrichtung vollständig oder im wesentlichen eingehaust ist, um die Umgebung vor Emissionen, insbesondere Lärm, und die Einrichtung vor unerwünschten Witterungseinflüssen zu schützen. Der den Arbeitsraum bzw. den Horizontalquerförderer, den Horizontallängsförderer und ggf. die Verkehrswege umfassende Umschlagsbereich kann wegen seiner geringen Fläche zu verhältnismäßig niedrigen Kosten mit Bodenwannen ausgerüstet sein, die dem Boden- und Grundwasserschutz dienen. In Längsrichtung der Verkehrswege vor und hinter der Umschlageinrichtung lassen sich Bereiche bzw. Vorrichtungen zur Identifizierung und Vermessung der Ladeeinheiten anordnen.

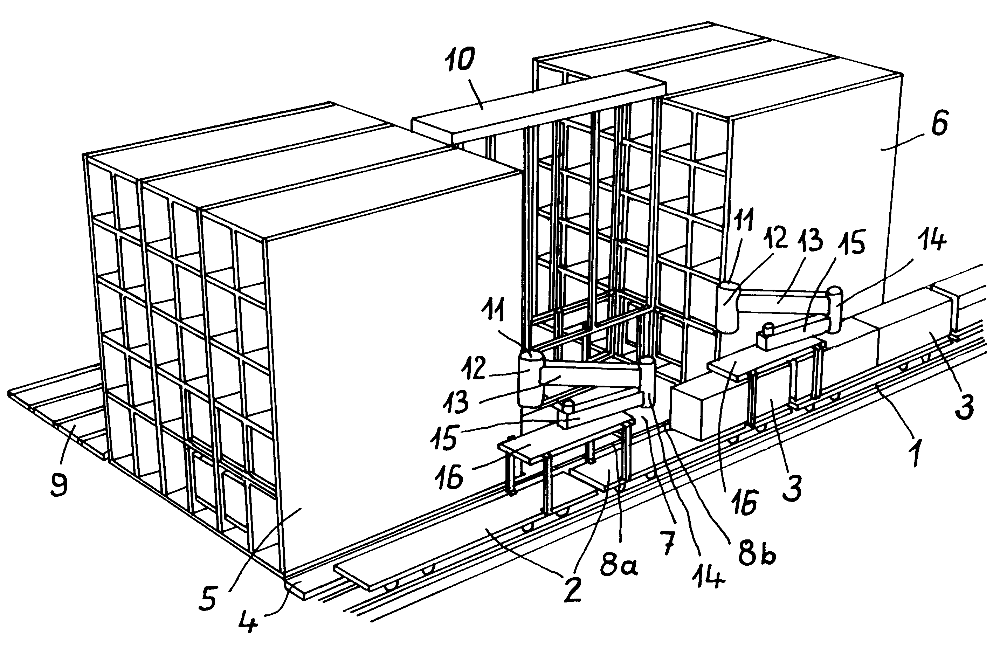

In der Zeichnung ist ein Ausführungsbeispiel einer erfindungsgemäßen Umschlageinrichtung in perspektivischer Ansicht dargestellt.

Auf einem Schienenverkehrsweg 1 laufen Schienenfahrzeuge 2 eines Containerzuges, die mit Ladeeinheiten 3 in Form von Containern besetzt sind. Auf der einen Seite des hier einspurig wiedergegebenen Schienenverkehrsweges 1 befindet sich unmittelbar an ihm entlanglaufend ein Horizontallängsförderer 4 sowie ein fünfgeschossiges Lager mit zwei Lagerteilen 5 und 6 und einem dazwischen liegenden Arbeitsraum 7, in dem ein in zwei Abschnitte 8a und 8b aufgeteilter Horizontalquerförderer 8 liegt. Auf der dem Schienenverkehrsweg 1 gegenüberliegenden Seite des Lagers 5, 6 verläuft - parallel zum Schienenverkehrsweg 1 - ein hier vierspuriger Straßenverkehrsweg 9, auf dem Straßenfahrzeuge, z.B. LKWs, auch mit Anhänger für den Containertransport oder mit gesondert handhabbarem Sattelauflieger, den Arbeitsraum 7 passieren. Im Arbeitsraum 7 ist ein Hubgestell 10 als Lagerhebezeug zwischen den Verkehrswegen 1 und 9 verfahrbar angeordnet. Es ist mit einem spreaderartigen Greifer an einer Traverse in der Weise ausgerüstet, daß Ladeeinheiten im Arbeitsraum 7 an beliebigen Stellen aufgenommen und abgestellt werden können. Weiter sind ebenfalls nicht dargestellte Übergabeeinrichtungen vorgesehen, die ggf. im Zusammenwirken zwischen dem Hubgestell 10 und entsprechenden Vorrichtungen in den Lagergassen ein Eingeben und Entnehmen von Ladeeinheiten 3 vom Hubgestell 10 in das bzw. aus dem Lager 5, 6 erlauben. An den Ecken des Arbeitsraumes 7 sind Schwenkgreifer 11 als Ladehebezeuge befestigt. Eine Schwenksäule 12 mit integrierter Hubeinrichtung trägt einen inneren Schwenkarm 13, an dem über ein Gelenk 14 ein äußerer Schwenkarm 15 angelenkt ist. An dessen freiem Ende ist, um eine lotrechte Achse drehbar, ein spreaderartiger Greifer 16 angebracht, der die Ladeeinheiten 3 zu erfassen und zwischen den Fahrzeugen 2 und dem Arbeitsraum 7 bzw. auch den für ihn erreichbaren Stellplätzen in den Lagerteilen 4 oder 5 zu transportieren gestattet. Die Aufnahme zweier kleinerer Ladeeinheiten gleichzeitig durch einen Greifer oder einer größten Ladeeinheit durch zwei Greifer gleichzeitig ist ebenfalls vorgesehen.

## Patentansprüche

1. Einrichtung zum Umschlagen von Stückgut in Form von Ladeeinheiten wie Containern, Wechselbehältern, Sattelanhängern o.dgl. zwischen Straßen- und Schienenfahrzeugen mit einem auf einer Seite eines ein- oder mehrspurigen Schienenverkehrsweges (1) liegenden ein- oder mehrgeschossigen Lager (5, 6) für die Ladeeinheiten (3), mit einem ein- oder mehrspurigen Straßenverkehrsweg (9) auf der anderen Seite des Lagers (5, 6) sowie mit Hebezeugen (10, 11) zum Umsetzen der Ladeeinheiten (3), dadurch gekennzeichnet, daß das Lager (5, 6) in Längsrichtung zweiteilig und mit einem Arbeitsraum (7) von mindestens der Länge der größten Ladeeinheit (3) entsprechender Breite zwischen den beiden Lagerteilen (5, 6) ausgeführt ist, in dem ein die Lagerteile (5, 6) bedienendes Lagerhebezeug (10) bewegbar ist, und daß an den vier Ecken des Arbeitsraumes (7) je ein Ladehebezeug (11) mit einer Ausladung von mindestens 3/4 der Länge der größten Ladeeinheit (3) zum Be- und Entladen der Fahrzeuge (2) insbesondere während deren Vorbeifahrt mit verminderter Geschwindigkeit und ggf. zum Einlagern der Ladeeinheiten (3) in das Lager (5, 6) fest angeordnet ist.

2. Einrichtung nach Anspruch 1, dadurch gekennzeichnet, daß das Lagerhebezeug (10) als im Arbeitsraum (7) quer zu den Verkehrswegen verfahrbares Hubgestell mit einem beispielsweise spreaderartigen Greifer für die Ladeeinheiten (3) und einer Übergabeeinrichtung zum Eingeben und Entnehmen der Ladeeinheiten (3) in das bzw. aus dem Lager (5, 6) ausgebildet ist.

3. Einrichtung nach Anspruch 1 oder 2, dadurch gekennzeichnet, daß das Ladehebezeug (11) als Schwenkgreifer mit zwei aneinander angelenkten Schwenkarmen (13, 15) gestaltet ist, dessen äußerer an seinem freien Ende einen beispielsweise spreaderartigen Greifer (16) trägt.

4. Einrichtung nach Anspruch 3, dadurch gekennzeichnet, daß zwischen der Befestigung des Schwenkgreifers (11) und dem inneren Schwenkarm (13) eine Schwenksäule (12) mit einer Hubeinrichtung vorgesehen ist.

5. Einrichtung nach Anspruch 3 oder 4, dadurch gekennzeichnet, daß die Länge des inneren Schwenkarms (13) so bemessen ist, daß das Gelenk (14) zwischen dem inneren und dem äußeren Schwenkarm (13, 15) in jeder Betriebslage außerhalb der Mitte der nächstgelegenen Spur des betreffenden Verkehrsweges bleibt.

6. Einrichtung nach Anspruch 1 oder 2, dadurch gekennzeichnet, daß das Ladehebezeug (11) als Teleskopgreifer mit einem teleskopierbaren, horizontal und vertikal schwenkbaren Tragbalken gestaltet ist, der an seinem freien Ende einen beispielsweise spreaderartigen Greifer trägt.

7. Einrichtung nach einem der vorhergehenden Ansprüche, dadurch gekennzeichnet, daß die beiden Ladehebezeuge (11) einer Lagerseite derart ausgebildet sind und zusammenwirken, daß sie gemeinsam eine Ladeeinheit bewegen, insbesondere um bis zu 180° um deren lotrechte Mittelachse drehen.

8. Einrichtung nach einem der vorhergehenden Ansprüche, dadurch gekennzeichnet, daß zwischen dem Schienenverkehrsweg (1) und dem Lager (5, 6) ein in Längsrichtung ein- oder mehrteiliger Horizontallängsförderer (4) angeordnet ist.

9. Einrichtung nach einem der vorhergehenden Ansprüche, dadurch gekennzeichnet, daß im Arbeitsraum (7) ein quer zu den Verkehrswegen (1, 9) verlaufender Horizontalquerförderer (8) angeordnet ist.

10. Einrichtung nach Anspruch 9, dadurch gekennzeichnet, daß der Horizontalquerförderer (8) in seiner Querrichtung in zwei Teile (8a, 8b) aufgeteilt ist, deren jeder einem Lagerteil (5, 6) zur getrennten gleichzeitigen Entladung über den einen Lagerteil und Beladung über den anderen Lagerteil zugeordnet ist.

11. Einrichtung nach einem der vorhergehenden Ansprüche, dadurch gekennzeichnet, daß dem Schienenverkehrsweg (1) eine Zug-/Schubeinrichtung zur gegenseitigen Abstimmung der Vorbeifahrgeschwindigkeit der Schienenfahrzeuge (2) und der Be- bzw. Entladegeschwindigkeit der Ladehebezeuge (11) zugeordnet ist.

12. Einrichtung nach einem der vorhergehenden Ansprüche, dadurch gekennzeichnet, daß zwei zweiteilige Lager (5, 6) in Längsrichtung hintereinander und mit einer dazwischenliegenden Fahrzeugbehandlungszone angeordnet sind, in der eine ggf. erforderliche auch manuelle Umrüstung der Fahrzeuge (2) zwischen Ent- und Beladung erfolgt.

13. Einrichtung nach einem der vorhergehenden Ansprüche, gekennzeichnet durch eine spiegelbildliche Lageranordnung zu beiden Seiten des Schienenverkehrsweges (1).

14. Einrichtung nach einem der vorhergehenden Ansprüche, dadurch gekennzeichnet, daß sie eingehaust ist.

15. Einrichtung nach einem der vorhergehenden Ansprüche, dadurch gekennzeichnet, daß der den Arbeitsraum (7) bzw. den Horizontalquerförderer (8), den Horizontallängsförderer (4) und ggf. die Verkehrswege (1, 9) umfassende Umschlagsbereich mit einer Bodenwanne ausgerüstet ist.

## Claims

1. Device for transloading unit loads in the form of loading units such as containers, detachable containers, semi-trailers and similar, between road and rail vehicles with a single- or multi-level storage facility (5, 6) for the loading units (3) located on one side of a single- or multi-track route (1) for rail vehicles, with a single- or multi-lane route (9) for road vehicles on the other side of the storage facility (5, 6) and with hoisting gear (10, 11) for transferring the loading units (3), characterised in that the storage facility (5, 6) is constructed in two parts in the longitudinal direction and with a working area (7) with a width corresponding at least to the length of the largest loading unit (3) between the two storage sections (5, 6), in which a storage hoisting gear (10) serving the storage sections (5, 6) is arranged to move, and that a respective loading hoisting gear (11) with a range of at least 3/4 of the length of the largest loading unit (3) is arranged in fixed position in each of the four corners of the working area (7) for loading and unloading the vehicles (2), in particular while they are travelling past at a low speed, and optionally for storing the loading units (3) in the storage facility (5, 6).

2. Device according to Claim 1, characterised in that the storage hoisting gear (10) is constructed as a hoisting frame, which may be moved in the working area (7) obliquely to the travel routes, for example, with spreader-like grippers for the loading units (3) and a transfer device for delivery and removal of the loading units (3) into and out of the storage facility (5, 6).

3. Device according to Claim 1 or 2, characterised in that the loading hoisting gear (11) is constructed as a slewing gripper with two slewing arms (13, 15) pivoted to one another, the outer arm supporting a spreader-like gripper (16), for example, on its free end.

4. Device according to Claim 3, characterised in that a slewing column (12) with a hoisting device is provided between the fastening of the slewing gripper (11) and the inner slewing arm (13).

5. Device according to Claim 3 or 4, characterised in that the length of the inner slewing arm (13) is dimensioned so that, in every operating position, the link (14) between the inner and the outer slewing arms (13, 15) remains outside the centre of the nearest track/lane of the relevant travel route.

6. Device according to Claim 1 or 2, characterised in that the loading hoisting gear (11) is constructed as a telescopic gripper with a telescopic support beam, which may slew horizontally and vertically and which carries a spreader-like gripper, for example, at its free end.

7. Device according to one of the preceding claims, characterised in that the two sets of loading hoisting gear (11) on one side of the storage facility are constructed and cooperate with one another in such a way that they can jointly move a loading unit, in particular turn it up to 180° around its perpendicular central axis.

8. Device according to one of the preceding claims, characterised in that a single- or multiple-part horizontal longitudinal conveyor (4) in longitudinal direction is disposed between the rail route (1) and the storage facility (5, 6).

9. Device according to one of the preceding claims, characterised in that a horizontal transverse conveyor (8) extending transversely to the travel routes (1, 9) is disposed in the working area (7).

10. Device according to Claim 9, characterised in that the horizontal transverse conveyor (8) is divided into two sections (8a, 8b) in its transverse direction, each of which being allocated to a storage section (5, 6) for separate simultaneous unloading via one storage section and loading via the other storage section.

11. Device according to one of the preceding claims, characterised in that a pulling/pushing system is allocated to the rail travel route (1) to coordinate the passing speed of the rail vehicles (2) and the loading or unloading speed of the loading hoisting gear (11) to one another.

12. Device according to one of the preceding claims, characterised in that two two-part storage facilities (5, 6) are arranged in longitudinal direction one behind the other and with a vehicle handling zone located between them, in which any necessary manual transfer of the vehicles (2) between unloading and loading occurs.

13. Device according to one of the preceding claims, characterized by a mirror-image storage arrangement on both sides of the rail route (1).

14. Device according to one of the preceding claims, characterized in that it is enclosed.

15. Device according to one of the preceding claims, characterised in that the transloading area comprising the working area (7) and the horizontal transverse conveyor (8) respectively and the horizontal longitudinal conveyor (4) and possibly the travel routes (1, 9) is equipped with a floor tank.

## Revendications

1. Dispositif destiné au transbordement de marchandises isolées sous la forme de charges unitaires telles que conteneurs, conteneurs interchangeables, semi-remorques ou similaires entre des véhicules routiers et des véhicules ferroviaires, avec un magasin (5, 6), pour les charges unitaires (3), à un ou plusieurs étages, situé sur un côté d'une ligne ferroviaire (1) à une ou plusieurs voies, avec une artère routière (9) à une ou plusieurs voies sur l'autre côté du magasin (5, 6) ainsi que des engins de levage (10, 11) pour le transfert des charges unitaires (3), caractérisé en ce que le magasin (5, 6) est réalisé en deux parties dans la direction longitudinale et avec un espace de travail (7) dont la largeur entre les deux parties du magasin (5, 6), correspond au moins à la longueur de la plus grande unité de charge (3), espace dans lequel un engin de levage de magasin (10) desservant les parties du magasin (5, 6), est déplaçable et en ce qu'à chacun des quatre angles de l'espace de travail (7) est prévu un engin de levage et de chargement (11) fixe avec une portée égale à au moins trois quarts de la longueur de la plus grande charge unitaire (3), pour le chargement et le déchargement des véhicules (2), en particulier durant leur passage à vitesse réduite et éventuellement pour le stockage des charges unitaires (3) dans le magasin (5, 6).

2. Dispositif selon la revendication 1, caractérisé en ce que l'engin de levage de magasin (10) est une structure de levage, déplaçable transversalement aux voies de circulation dans l'espace de travail (7), avec une pince, par exemple en forme d'agrippeur, pour les charges unitaires (3) et avec un dispositif de remise pour introduire et pré-lever les charges unitaires (3) dans le magasin (5, 6) ou à partir de celui-ci.

3. Dispositif selon la revendication 1 ou 2, caractérisé en ce que l'engin de levage et de chargement (11) est une pince pivotante avec deux bras pivotants (13, 15) articulés l'un sur l'autre, dont le bras extérieur porte à son extrémité libre une pince (16), par exemple en forme d'agrippeur.

4. Dispositif selon la revendication 3, caractérisé en ce qu'entre la fixation de la pince pivotante (11) et le bras pivotant intérieur (13), il est prévu une colonne pivotante (12) avec un dispositif de levage.

5. Dispositif selon la revendication 3 ou 4, caractérisé en ce que la longueur du bras pivotant intérieur (13) est telle que l'articulation (14) entre le bras pivotant intérieur (13) et le bras pivotant extérieur (15) reste, dans toute position de fonctionnement, à l'extérieur du milieu de la voie la plus proche de l'artère concernée.

6. Dispositif selon la revendication 1 ou 2, caractérisé en ce que l'engin de levage et de chargement (11) est une pince télescopique avec une poutre télescopique, pivotant horizontalement et verticalement qui, à son extrémité libre porte une pince, par exemple en forme d'agrippeur.

7. Dispositif selon l'une des revendications précédentes, caractérisé en ce que les deux engins de levage et de chargement (11) d'un côté du magasin sont conçus et coopèrent de manière à déplacer conjointement une charge unitaire, en particulier à la faire tourner jusqu'à 180° autour de son axe médian vertical.

8. Dispositif selon l'une des revendications précédentes, caractérisé en ce qu'il est prévu un convoyeur longitudinal horizontal (4) en une ou plusieurs parties entre la ligne ferroviaire (1) et le magasin (5, 6).

9. Dispositif selon l'une des revendications précédentes, caractérisé en ce que dans l'espace de travail (7) il est prévu un convoyeur transversal horizontal (8), s'étendant transversalement aux voies de circulation (1, 9).

10. Dispositif selon la revendication 9, caractérisé en ce que le convoyeur transversal horizontal (8) est partagé transversalement en deux parties (8a, 8b), dont chacune est affectée à une partie de magasin (5, 6) pour le déchargement simultané séparé sur une partie du magasin et le chargement sur l'autre partie du magasin.

11. Dispositif selon l'une des revendications précédentes, caractérisé en ce qu'à la ligne ferroviaire (1) est affecté un dispositif de traction/poussée pour l'accord réciproque de la vitesse de passage des véhicules ferroviaires (2) et la vitesse de chargement ou de déchargement des engins de levage et de chargement (11).

12. Dispositif selon l'une des revendications précédentes, caractérisé en ce qu'il est prévu deux magasins (5, 6) en deux parties l'un derrière l'autre dans la direction longitudinale et avec une zone de traitement de véhicules située entre les deux, dans laquelle il est procédé à un changement d'équipement, éventuellement nécessaire, même manuel, des véhicules (2), entre le déchargement et le chargement.

13. Dispositif selon l'une des revendications précédentes, caractérisé par une disposition en miroir du magasin des deux côtés de la ligne ferroviaire (1).

14. Dispositif selon l'une des revendications précédentes, caractérisé en ce qu'il est abrité.

15. Dispositif selon l'une des revendications précédentes, caractérisé en ce que la zone de transbordement, comprenant l'espace de travail (7) ou le convoyeur transversal horizontal (8), le convoyeur longitudinal horizontal (14) et éventuellement les voies de circulation (1, 9), est équipée d'un cuvelage de sol.
